# EUROPEAN PATENT APPLICATION

(11) **EP 4 538 893 A1**
(43) Date of publication of application: **16.04.2025**
(21) Application number: 23383038.9
(22) Date of filing: 10.10.2023
(51) Int. Cl.: G06F 11/34, G06F 11/36

(54) **INSTRUMENTATION LIBRARY**

(71) Applicant: Sage Global Services Limited, Newcastle upon Tyne NE28 9EJ (GB)
(72) Inventor: Martinez Fuentes, Jose, Santa Coloma de Gramanet (ES)
(74) Representative: Curell Suñol S.L.P.

(57) **Abstract**

Disclosed herein is a method of generating telemetry data in a serverless environment. The method comprises the steps of: invoking a stateless function, said stateless function comprising an instrumentation library module configured to facilitate telemetry data collection during the execution of the stateless function, said instrumentation library comprising at least a first functional unit, said first functional unit associated with a first service at least by being configured to process trace data associated with that first service; receiving data, at the stateless function, from the first service; extracting, by the functional unit, trace data from the received data; converting the trace data into telemetry data, and emitting the telemetry data to an observability tool.

## Description

### Technical Field

The present invention relates to techniques for generating telemetry data in applications implemented in serverless environments.

### Background

"Serverless" computing is a modern distributed computing technique where applications are deployed directly to a "serverless" environment in which server management is largely or completely transparent to the application developer. Server management is typically handled by a third-party provider of the serverless platform, rather than being a responsibility of the developer. An example of such a platform is "AWS Lambda," provided by Amazon Web Services.

Applications deployed in a serverless environment typically consist of a plurality of developer-defined stateless "functions" that are triggered by specific events or requests, often through "communication services" provided within the environment itself, such as services related to message queuing, notifications, bus of events, and database event handling. These stateless functions execute individually and because they are stateless, they do not retain information between executions. The third-party provider of the serverless environment automatically manages the provisioning and scaling of these stateless functions.

From the application developer's perspective, application deployment in serverless environments offers several advantages, including automatic scaling, cost efficiency, and reduced operational overhead. However, because application developers do not directly control or manage the servers on which their applications run, monitoring application performance, such as resource utilisation, latency, and error rates cannot be achieved using conventional server-monitoring tools.

Consequently, application deployment within a serverless environments is typically accompanied by the use of "observability tools". Observability tools are software applications used for tracking, visualising, and understanding what is happening inside a system. They receive telemetry data, which consists of performance-related information like logs, traces, and other metrics set by the developer, from the stateless functions while the application is running.

It is common for a proprietary observability tool to be provided with a given serverless environment. For example, Amazon Web Services provides "AWS X-Ray" for use with AWS Lambda. However, whilst such proprietary tools are well integrated into the environment for which they were designed, their use can result in so-called "tight-coupling" with application code. In this context, "tight-coupling" refers to a situation where the application code is dependent on the specific proprietary observability tool to the extent that that changes to the tool or its functionalities require corresponding changes to the application code itself. This interdependency can create difficulties in maintaining and updating application code, increasing development costs and time.

Consequently, it is often preferable to develop applications which are to be implemented in serverless environments in such a way that they emit telemetry data in accordance with an open standard, for example OpenTelemetry (an open standard governed by the Cloud Native Computing Foundation (CNCF) for monitoring cloud-native applications), meaning that alternative non-proprietary observability tools can be used. Additionally, switching between these non-proprietary tools can be done without requiring any code changes, for example switching between. "New Relic" and "DataDog".

However, if applications are written to emit telemetry data in accordance with a non-proprietary format (for example in accordance with the OpenTelemetry standard), important functionality may be lost. This is because the underlying serverless environment may not support the collection of certain types of telemetry data unless it is emitted in accordance with the default, usually proprietary, format. For example, where applications are developed using the .NET language for deployment in AWS Lambda, if an open standard such as OpenTelemetry is used, the generation of certain important types of telemetry data are not supported. In particular distributed tracing (where individual requests are tracked as they propagate across multiple stateless functions and services, providing a view of how different parts of a system interact with one another), and logging data (where records of application events, errors, and operations are maintained).

Consequently, difficulties arise for developers seeking to deploy applications in a serverless environment. To avoid tight-coupling, developers are motivated to have their applications emit telemetry data in accordance with open standards to prevent strong dependencies on proprietary backends. However, this can be hard to achieve because some certain important telemetry data types are exclusively supported by proprietary formats.

### Summary of the Invention

In accordance with a first aspect of the invention there is provided a method of generating telemetry data in a serverless environment. The method comprises the steps of: invoking a stateless function, said stateless function comprising an instrumentation library module configured to facilitate telemetry data collection during the execution of the stateless function, said instrumentation library comprising at least a first functional unit, said first functional unit associated with a first service at least by being configured to process trace data associated with that first service; receiving data, at the stateless function, from the first service; extracting, by the functional unit, trace data from the received data; converting the trace data into telemetry data, and emitting the telemetry data to an observability tool.

Optionally, the method further comprises: executing by the stateless function at least one process which generates output data to be output to the first service; generating trace data associated with the process; injecting, by the first functional unit associated with the specific service, the trace data in the output data, and outputting the trace data to the specific service.

Optionally, the instrumentation library comprises at least one further functional unit, said at least one further functional unit associated with a further service by being configured to process trace data associated with that further service. The method further comprises executing by the stateless function the at least one process which generates output data to be output to the further service; generating further trace data associated with the further process; injecting, by the further functional unit, the further trace data in the output data, and outputting the trace data to the further service

Optionally, the instrumentation library further comprises a core functionality module, and the step of converting the trace data into telemetry data and emitting the telemetry data to an observability tool is undertaken by functionality defined in the core functionality module.

Optionally, converting the trace data into telemetry data comprises generating and the telemetry data in accordance with an open telemetry standard.

Optionally, the open telemetry standard is the OpenTelemetry standard.

Optionally, the trace data is generated in accordance with the W3C TraceContext standard.

Optionally, the method further comprises configuring the serverless environment to run the stateless function in the serverless environment decoupled from a proprietary observability tool.

Optionally, the method further comprises configuring the serverless environment to run the stateless function in the serverless environment to direct all telemetry data to a predetermined observability tool.

Optionally, the predetermined observability tool is a non-proprietary observability tool.

In accordance with a further aspect of the invention, there is provided a computer program comprising computer code defining an instrumentation library which when instantiated in an invoked stateless function as part of an application running in a serverless environment, facilitates telemetry data collection during the execution of the stateless function. The instrumentation library comprises at least a first functional unit, said first functional unit associated with a first service of the serverless environment at least by being configured to process trace data associated with that first service. The at least first functional unit when implemented as part of the stateless function is configured to: extract trace data from data received from the first service, said instrumentation library comprising further functionality which when implemented as part of the stateless function is configured to: convert the trace data into telemetry data, and emit the telemetry data to an observability tool.

Optionally, the first functional unit when implemented as part of the stateless function is further configured to: inject trace data generated by the invoked stateless function in output data output by the invoked stateless function to the specific service.

Optionally, the said instrumentation library comprises at least a further functional unit, said further functional unit associated with a further service of the serverless environment at least by being configured to process trace data associated with that further service, wherein the further functional unit when implemented as part of the stateless function is configured to: inject trace data generated by the invoked stateless function in output data output by the invoked stateless function to the further service.

Optionally, the instrumentation library further comprises a core functionality module, said core functionality module when implemented as part of the stateless function is configured to: convert the trace data into telemetry data, and emit the telemetry data to an observability tool is undertaken by functionality defined in the core functionality module.

Optionally, the core functionality module is configured to convert the trace data into telemetry data in accordance with an open telemetry standard.

Optionally, the open telemetry standard is the OpenTelemetry standard.

Optionally, the trace data is trace data in accordance with the W3C TraceContext standard.

In accordance with certain examples of the present technique, when a stateless function is invoked as part of an application implemented in a serverless environment, it is done so with a special instrumentation library module.

The instrumentation library module includes at least one functional unit. This functional unit is configured to process trace data from a specific service from which that stateless function receives data. Typically, this service is the service that invoked the stateless function. This extracted trace data can then be readily converted into telemetry data for communicating to an observability back end. In particular, this trace data can be converted to telemetry data in accordance with any suitable protocol or standard, for example an open standard, overcoming any requirement to use any proprietary observability tools and therefore avoiding tight-coupling with such proprietary observability tools,

In certain embodiments, if the stateless function also outputs data to the specific service, the functional module is further configured to inject any trace data generated by the stateless function into the data output to the specific service.

In certain embodiments, the instrumentation library module may comprise one or more further functional units which are configured to inject trace data into data communicated by the stateless functions to other services. In such examples, each functional unit is associated with one specific service and is thus configured to inject trace data into data output to that specific service.

Accordingly, in typical embodiments, each library module instance comprises a plurality of functional units, each of which are configured to independently process incoming, and typically outgoing, trace data for a specific serverless-environment service. Further, each library module instance comprises functionality configured to convert trace data extracted by each functional unit into an appropriate format so that it can be emitted by each invoked stateless function in accordance with a predetermined (e.g. open) telemetry standard.

The inclusion of such an instrumentation library module in each stateless function of an application means that telemetry data can be generated independently from within each functional unit and therefore independently of any proprietary mechanisms specified by the provider of the serverless environment. In particular, a developer can develop their own instrumentation library code defining the instrumentation library modules so that telemetry data can be emitted in accordance with a predetermined standard, for example an open standard, which is interoperable with non-proprietary observability tools. The instrumentation library code can also be written in such a way as to readily facilitate certain forms of telemetry data generation including for example distributed tracing.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a simplified schematic diagram depicting a conventional system for developing and deploying applications in a serverless environment;
Figure 2 provides a simplified schematic diagram depicting a system for developing and deploying serverless applications in accordance with certain examples of the invention;
Figure 3 provides a schematic diagram depicting an example structure of instrumentation library code in accordance with certain examples of the invention;
Figure 4 provides a simplified schematic diagram depicting an example of operation of invoked stateless functions including instantiations of instrumentation libraries in accordance with certain examples of the invention;
Figure 5 provides a simplified schematic diagram depicting the structure of code for an instrumentation library in accordance with an example of the present invention;
Figure 6 provides a diagram depicting an example implementation of certain components of an instrumentation library of the type described with reference to Figure 5, and
Figure 7 provides a flow diagram depicting a process flow in accordance with certain embodiments of the invention.

### Detailed Description

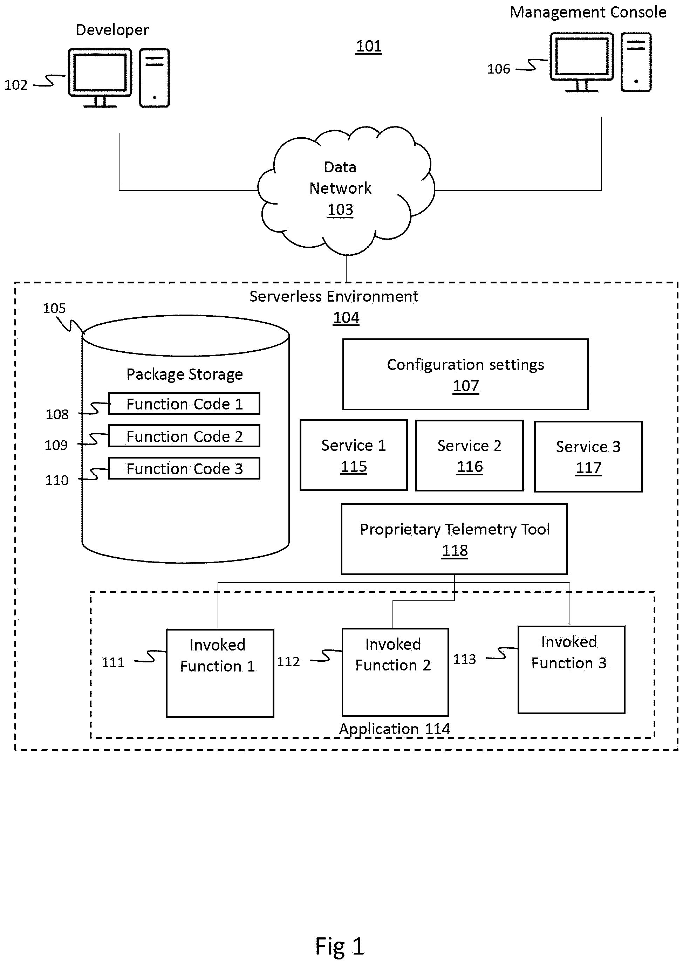

Figure 1 provides a simplified schematic diagram depicting a conventional system 101 for developing and deploying applications in a serverless environment.

The system 101 includes a developer workstation 102 connected via a data network 103 to a serverless environment 104. The developer workstation 102 is typically a computer system running specialised code editing software enabling a developer to write code, in particular code specifying one or more stateless "functions", which are invoked during the running of an application on the serverless environment 104.

Code written on the developer workstation 102 is uploaded via the data network 103 and stored in a package storage 105 within the serverless environment 104. Each stateless function of the application has a corresponding code package stored in the package storage 105.

The system 101 also includes a management console 106 connected to the serverless environment 104 through the data network 103. The management console 106 controls the settings and operating environment within which the stateless functions run in the serverless environment 104. In particular, the management console 106 controls a configuration settings module 107, via which configuration data can be set which controls the settings for the environment in which stateless functions running in the serverless environment 104 are executed.

To illustrate the operation of the system 101, Figure 1 shows first, second, and third function code packages 108, 109, and 110 stored in the package storage 105. Under the control of the management console 106, these code packages are invoked as the first, second, and third stateless functions 111, 112, and 113, respectively. Together, these stateless functions form an application 114 running in the serverless environment 104.

The serverless environment 104 provides several service interfaces, represented in Figure 1 as first, second, and third serverless-environment service interfaces 115, 116, and 117. These service interfaces provide access to data processing operations ("services") provided by the serverless environment 104 facilitating tasks such as data streaming, event handling, message queuing, and which also enable interaction between the stateless functions 111, 112, and 113.

The serverless environment 104 incorporates a proprietary telemetry tool 118. In examples in which the serverless environment 104 is provided by AWS Lambda, this would be Amazon Web Service's "AWS X-Ray" tool. Default settings in the configuration settings module 107 typically control the first, second, and third stateless functions 111, 112, and 113 to emit telemetry data to the proprietary telemetry tool 118. Telemetry data generated by the proprietary telemetry tool 118 can be accessed via the management console 106. In this way, the proprietary telemetry tool 118 monitors the execution of the stateless functions 111, 112, and 113 providing insights into the performance of the application 114, such as execution time and resource usage.

However, in certain settings, the generation of telemetry data in this way is restrictive. In particular, the code for the application 114 (defined in part by the function code packages 108, 109, 110) becomes "tightly-coupled" to the proprietary telemetry tool 118 such that changes to the proprietary telemetry tool 118 necessitate changes to the application code. However, if the code for the application 114 is adapted so that telemetry data is emitted in accordance with an open standard (for example OpenTelemetry) and can therefore be emitted to non-proprietary observability tools (for example serverless monitoring tools of the type provided by companies such as New Relic), the generation of certain types of more advanced telemetry data, such as distributed tracing, may not be supported within the serverless environment 104.

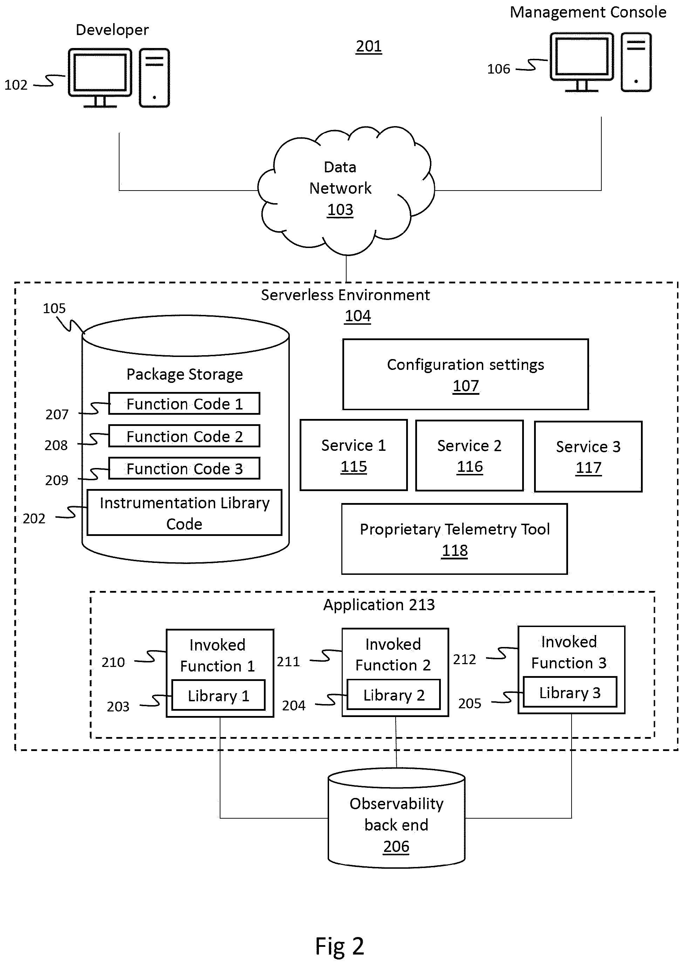

Figure 2 provides a simplified schematic diagram depicting a system 201 for developing and deploying serverless applications in accordance with certain examples of the invention. The system shown in Figure 2 corresponds to that shown in Figure 1 (corresponding components are labelled with corresponding reference numerals). In keeping with the system described with reference to Figure 1, the system 201 comprises a package storage 105 on which is stored a first function code package 207, a second first function code package 208 and a third function code package 209, for invoking, respectively, a first stateless function 210, second stateless function 211 and third stateless function 212. These stateless functions together implement an application 213.

However, in contrast to the system 101 described with reference to Figure 1, in the system 201 shown in Figure 2, the package storage 105 has stored thereon instrumentation library code 202 defining an instrumentation library module, an instance of which is instantiated in every stateless function which is invoked when running the application 213. This is depicted in Figure 2, specifically as a first library module instance 203 instantiated in the first stateless function 210, a second library module instance 204 instantiated in the second stateless function 211 and a third library module instance 205 instantiated in the third library 205.

Each instrumentation library module instance is configured such that each invoked stateless function 210, 211, 212 can emit telemetry data in accordance with an open telemetry standard and consequently a non-proprietary observability back end 206 can be used to receive and process the telemetry data.

More specifically, the instrumentation library module is such that each instrumentation library module instance comprises a plurality of functional units, each of which provide functionality (provided by, for example, classes, methods, and data structures and any other suitable form of code for defining the functionality) to independently process incoming, and typically outgoing, trace data for a specific serverless-environment service. Further, each library module instance comprises functionality configured to convert trace data extracted by each functional unit into an appropriate format so that it can be emitted by each invoked stateless function in accordance with a predetermined (e.g. open) telemetry standard.

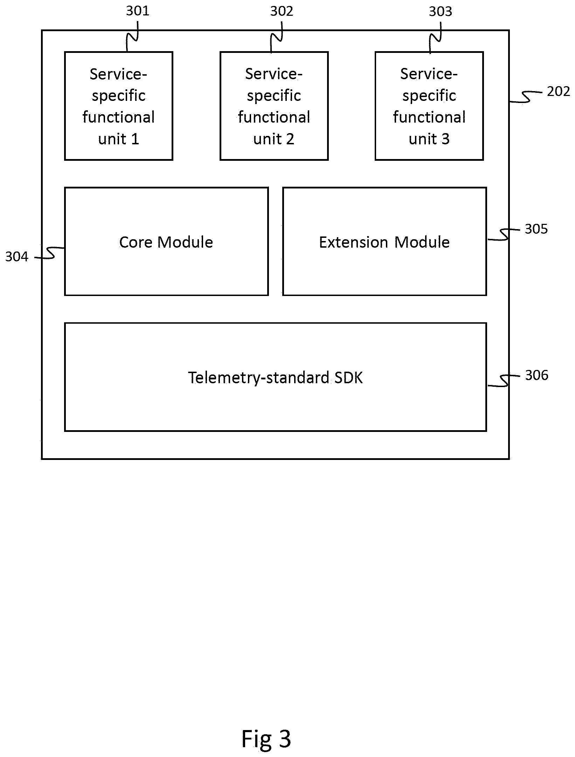

Figure 3 provides a simplified schematic diagram depicting in more detail an example structure of the instrumentation library code 202.

The instrumentation library code 202 comprises a plurality of service-specific functional units. Each of these service-specific functional units is associated with a specific service interface in that it is specifically configured (i.e., comprises functionality provided by suitable code) to process trace data associated with that specific service interface. Thus, the instrumentation library code 202 comprises: a first functional unit 301 configured to process trace data associated with the first serverless-environment service interface 115; a second functional unit 302 configured to process trace data associated with the second serverless-environment service interface 116, and a third functional unit 303 configured to process trace data associated with the third serverless-environment service interface 117.

Each functional unit is configured to process trace data for the service interface with which it is associated by being operable to extract trace data from data received by from that service interface. Typically, each functional unit is further configured to inject trace data into data output by the stateless function to the service interface with which it is associated.

Thus, with reference to Figure 3, the first functional unit 301 is configured to extract trace data from incoming data from the first serverless-environment service interface 115 and inject trace data generated by an invoked stateless function output to the first serverless-environment service interface 115; the second functional unit 302 is configured to extract trace data from incoming data from the second serverless-environment service interface 116 and inject trace data generated by an invoked stateless function output to the second serverless-environment service interface 116, and the third functional unit 303 is configured to extract trace data from incoming data from the second serverless-environment service interface 116 and inject trace data generated by an invoked stateless function output to the second serverless-environment service interface 116.

The instrumentation library code 202 further comprises a core functionality module 304. The core functionality module 304 comprises suitable code (e.g. including suitable functions, methods and data structures) defining core functionality of the library, in particular the manner in which telemetry data is generated from the trace data extracted by the service-specific functional units 301, 302, 303. In typical examples, the core functionality module 304 further defines functionality specifying how data to be output from the invoked stateless function is converted into trace data by each functional unit to be injected into outgoing data.

The instrumentation library code 202 further comprises an extension module 305. The extension module 305 provides a module where extended functionality can be added to the library, for example suitable code (e.g. including suitable functions, methods and data structures) extending the functionality of certain aspects of the core functionality module 304 or one or more of the service-specific functional units. The extension module 305 may also include additional settings data specifying the manner in which a library module instance is instantiated in an invoked function, the manner in which it operates within the invoked stateless function and the manner in which it interacts with other components of the invoked function.

The instrumentation library code 202 further comprises a telemetry-standard software development kit (SDK) 306. The telemetry-standard SDK 306 provides methods, interfaces and protocols enabling instances of the instrumentation library code 202, and in particular the core functionality module 304 to emit telemetry data and interact with observability backends in accordance with a predefined telemetry standard. In certain examples, this predefined standard is an open telemetry standard such as the OpenTelemetry standard.

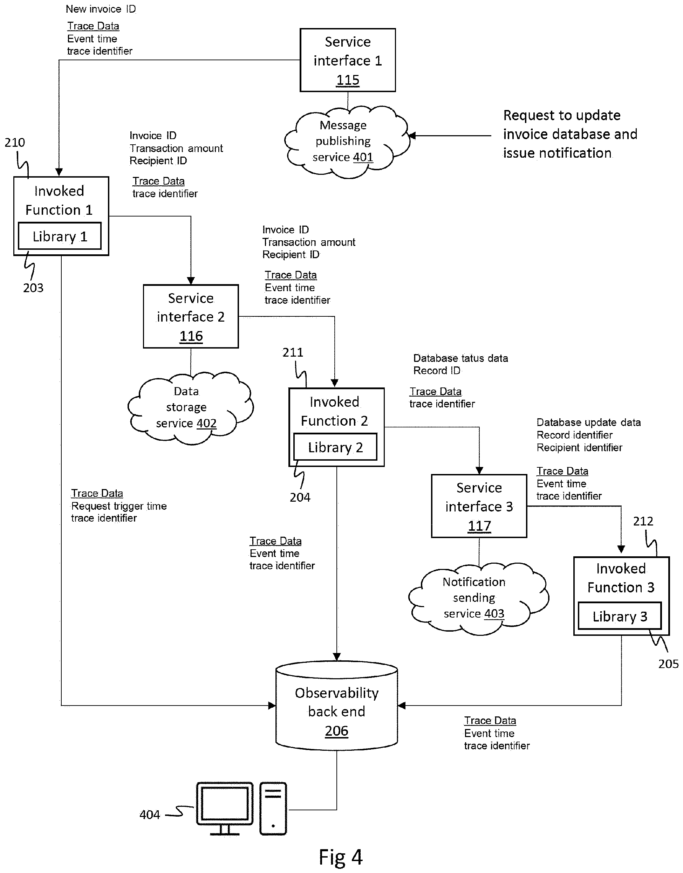

Figure 4 provides a simplified schematic diagram depicting an example of the operation of the invoked stateless functions shown in Figure 2 and in particular the manner in which, by virtue of the instantiation of the instrumentation library code 202 (arranged as described with reference to Figure 3), they emit telemetry data to the observability back end 206.

This illustrative example is described in terms of a simple accounting task in which an invoice database is reconciled with a newly created invoice and then a notification is sent to a recipient. This example is intentionally simplified to facilitate a clear understanding of the invention's core functionality. Typical applications deployed in accordance with the present technique may involve more complex arrangements and interdependencies. For instance, stateless functions may output data to multiple services, further functions may be invoked as part of more complex workflows, and additional services could be integrated into the system.

In this example, the first stateless function 210 is a function for fetching the relevant invoice details for the database update, the second stateless function 211 is a function for updating an invoice database, and the third stateless function 212 is a function for issuing a notification when the invoice database has been updated.

Further, the first serverless-environment service interface 115 provides the interface for a message publishing service 401; the second serverless-environment service interface 116 provides the interface for a data storage service 402, and the third serverless-environment service interface 117 provides the interface for a notification sending service 403.

Initially, a new invoice is created in an accounting system which triggers the automated generation of a request to update an invoice database and issue a notification. This request is passed to the the message publishing service 401.

Responsive to this, the message publishing service invokes the first stateless function 210 via the first serverless-environment service interface 115.

The first stateless function 210 is passed data from the first serverless-environment service interface 115 including, for example, a new invoice ID. Trace data is passed to the first stateless function 210 including event time data and a trace identifier. The event time data indicates the time at which the first stateless function 210 was invoked. The trace identifier is data that is uniquely associated with the specific request to update the invoice database and issue the notification and enables its execution to be tracked as the various functions are sequentially invoked and executed.

The first functional unit 301 of the first library module instance 203, which in this example is associated with the message publishing service 401, extracts this trace data (i.e. the event time data and the trace identifier). Using protocol data defined in the telemetry-standard SDK 306, functionality defined in the core functionality module 304 enables the first stateless function 210 to generate and emit telemetry data, based on this trace data, to the observability back end 206.

Meanwhile, the first stateless function 210 executes. In this example, the first stateless function 210 executes by retrieving a recipient ID and transaction amount data associated with the new invoice identified by the new invoice ID.

The first stateless function 210 then generates output data to pass to the next service to continue the processing of the request. In this example, this may be the invoice ID and the retrieved recipient ID transaction amount.

The first stateless function 210 also generates outgoing trace data, which in this case comprises the trace identifier. The first functional unit 301 in the first library module instance 203 injects this outgoing trace data into the output data. The output data, including the injected trace data, is then output by the first stateless function 210 to the second serverless-environment service interface 116.

On receipt of the output data from the first stateless function 210, the second stateless function 211 is invoked by the data storage service 402.

The second serverless-environment service interface 116 passes data to the second stateless function 211 including the invoice ID, the transaction amount and the recipient ID. It also passes trace data including event time data and the trace identifier. The event time data is time stamp data indicating a time at which the second stateless function 211 was invoked.

The second functional unit 302 of the second library module instance 204, which in this example is associated with the data storage service 402, extracts this trace data (i.e. the event time data and the trace identifier). Using protocol data defined in the telemetry-standard SDK 306, functionality defined in the core functionality module 304 enables the second stateless function 211 to generate and emit telemetry data, based on this trace data, to the observability back end 206.

Meanwhile, the second stateless function 211 executes. For example, the second stateless function 211 may execute by taking the received invoice ID, transaction amount and recipient ID, and then generating an appropriate database update query which is then communicated to the invoice database.

The second stateless function 211 then generates output data to pass to the next service to continue the processing of the request. In this example, this may be a database status update message indicating that the invoice database has been successfully updated and a record identifier identifying the updated record.

The second functional unit 302 also generates outgoing trace data, which comprises the trace identifier. The second functional unit 302 in second library module instance 204 injects this trace data into the output data. The output data, including the injected trace data, is then output by the second stateless function 211 to the third serverless-environment service interface 117.

On receipt of the output data from the second stateless function 211, the third stateless function 212 is then invoked via the third serverless-environment service interface 117.

The third serverless-environment service interface 117 passes to the third stateless function 212 data including an indication that the invoice database has been updated, a record identifier and a message recipient identifier. It also passes trace data including the event time and the trace identifier. The event time data is time stamp data indicating a time at which the third stateless function 212 was invoked.

The third functional unit 303 of the third library module instance 205, which in this example is associated with the notification sending service 403, extracts this trace data (i.e. the event time and the trace identifier). Using protocol data defined in the telemetry-standard SDK 306, functionality defined in the core functionality module 304 enables the third stateless function 212 to generate and emit telemetry data, based on this trace data, to the observability back end 206.

Meanwhile, the third stateless function 212 executes. For example, the third stateless function 212 executes by taking the received record identifier and message recipient identifier and generating and sending a message to a recipient indicating that the identified record has been updated.

As will be understood, in this example the first library module instance 203, second library module instance 204 and third library module instance 205 extract and inject trace data related to the operations of each of the invoked stateless functions 210, 211, 212 and this trace data adheres to a telemetry standard as defined in the telemetry-standard SDK 306. As the request is processed by the stateless functions and serverless-environment services interfaces 115, 116, 117, the unique trace identifier is passed along. This allows the observability back end 206 to monitor the execution of each request at every stage, enabling distributed tracing at the observability back end 206.

In typical embodiments, the trace data is generated and communicated between the invoked stateless functions 210, 211, 212 and serverless-environment services interfaces 115, 116, 117 in accordance with the W3C TraceContext standard. In accordance with this standard, the unique trace identifier described above is typically provided by the "trace identifier" field of the "traceparent" header.

As depicted in Figure 4, the observability back end 206 is typically connected to an interface 404 enabling the presentation and analysis of the telemetry data. Typically, this includes visualization of logging data, metric data, and trace data. This can be provided in any suitable way as is known in the art, for example presented via a web interface provided on a suitable computing device.

The telemetry data thus presented can provide detailed insights into specific events and behaviours within the application, allowing for targeted debugging and optimisation. Metric data offers quantitative measurements of key performance indicators, such as response times and resource use and enabling ongoing performance monitoring. Trace data enables the tracking of requests as they flow through various components of the application, enabling, for example trouble-shooting associated with the interaction between the stateless functions 210, 211 and 212.

The skilled person will understand, techniques in accordance with examples of the present invention can be deployed in any suitable environment in which applications are implemented using serverless technologies.

In a simple example described with reference to Figure 4, each invoked function uses two different functional units from the instrumentation library module because the trace data to be extracted and the trace data to be injected are associated with different serverless environment services. However, as the skilled person will understand, in other examples, an invoked stateless function may output data back to the serverless environment service that invoked it. In this case, the same functional module will be used for both extracting the trace data from the received data and for injecting trace data into the output data.

In one example, an instrumentation library in accordance with certain embodiments of the invention can be implemented in the AWS Lambda serverless environment provided by Amazon Web Services. A deployment of an instrumentation library in this example, is particularly useful when an application has been developed using the .NET framework as certain key functionalities, including the generation of distributed trace telemetry data and logging telemetry data (linked with the distributed trace data) is typically not supported unless the proprietary AWS X-Ray observability tool is used.

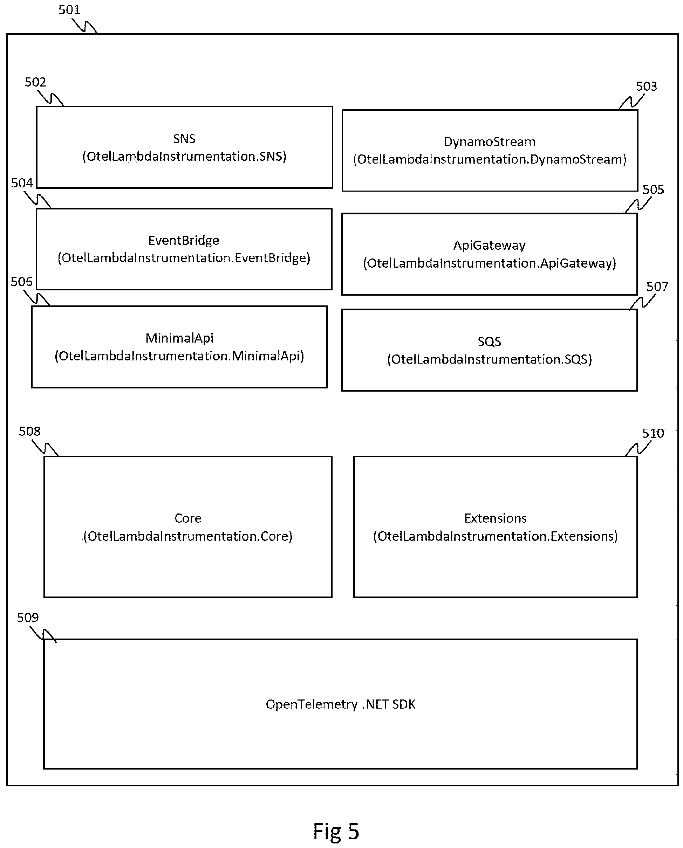

Figure 5 provides a simplified schematic diagram depicting the structure of code for an instrumentation library 501 in such an example and in which data is emitted from instances of such a library in accordance with the OpenTelemetry standard. In this example, the instrumentation library 501 comprises a plurality of service-specific functional units which are configured to process trace data associated with a specific serverless-environment service interface thereby enabling trace data to be generated on a service-by-service basis and emitted in accordance with an open telemetry standard.

In this illustrative example, the instrumentation library 501 is comprised of several functional units. The first functional unit 502 is associated with the Amazon Simple Notification Service ("SNS"), a messaging service for application-to-application (A2A) and application-to-person (A2P) communication. The second functional unit 503 is associated with "DynamoStream," a feature of Amazon DynamoDB that captures changes to items stored in a database table. The third functional unit 504 is associated with "EventBridge," a serverless event bus service that ingests and routes data from various sources. The fourth functional unit 505 is associated with "ApiGateway," a service for managing and controlling access to APIs. The fifth functional unit 506 is associated with "MinimalApi," a lightweight API layer. The sixth functional unit 507 is associated with the Amazon Simple Queue Service ("SQS"), a service that enables asynchronous message processing by allowing messages to be stored in a queue and processed by receiving components at a later time, thereby improving system responsiveness and allowing for variations in traffic and processing times.

When instantiated in a AWS lambda function, each functional unit is configured to process trace data for the AWS service interface with which it is associated so that corresponding telemetry data can be generated. In particular, each functional unit is configured to extract trace data from data received from the service with which it is associated and to inject trace data into data to be sent to the service with which it is associated.

As described above, the instrumentation library 501 further comprises a core functionality module 508. The core functionality module 508 provides functionality for converting this trace data to telemetry data and emitting the trace data to the observability backend. The core functionality module 508 further comprises functionality defining how trace data is generated which is then injected into data output from the functional units to further serverless-environment services.

The instrumentation library 501 further comprises a telemetry-standard SDK 509, which in this example is an OpenTelemetry .NET SDK. This is an SDK that is configured to facilitate exporting telemetry data, e.g., logging data, event data, and trace data, in accordance with the OpenTelemetry standard and configured for monitoring applications developed in the .NET framework. Accordingly, the telemetry-standard SDK 509 defines the methods, interfaces and protocols necessary for the core functionality module 508 to generate and emit the telemetry data in accordance with the OpenTelemetry standard. In keeping with the example described with reference to Figure 3, the instrumentation library 501 further comprises an extension module 510 for extending the functionality of the core functionality module 508.

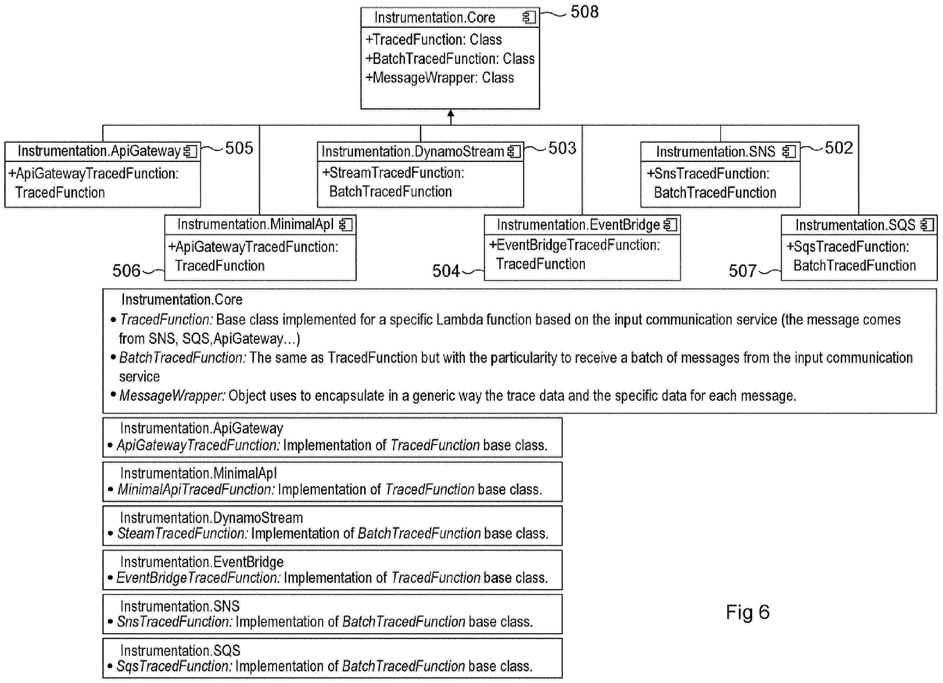

Figure 6 provides a schematic diagram depicting an example implementation of certain components of the instrumentation library 501 described with reference to Figure 5.

In particular, Figure 6 depicts the core functionality module 508 which comprises a "TracedFunction" class, defining a base class for extracting trace data from received individual requests, a "BatchTracedFunction" class defining a base class for extracting trace data from received batch requests and a "MessageWrapper" class defining a class for injecting trace data into outgoing requests.

The first functional unit 502, second functional unit 503, third functional unit 504, fourth functional unit 505, fifth functional unit 506 and sixth functional unit 507 all contain further specialised classes which extend the relevant base classes defined in the core functionality module 508 to process trace data for the specific service to which they relate.

For example, the "ApiGatewayTracedFunction" defined in the fourth functional unit 505, "MinimalApiTracedFunction" defined in the fifth functional unit 506, and "EventBridgeTracedFunction" defined in the third functional unit 504, extend the "TracedFunction" defined in the core functionality module 508 for processing trace data relating to individual requests.

The "StreamTracedFunction" defined in the second functional unit 503, the "SnsTracedFunction" defined in the first functional unit 502, and "SqsTracedFunction" defined in the sixth functional unit 507, extend the "BatchTracedFunction" defined in the core functionality module 508 for processing trace data relating to batch requests.

As mentioned above, in typical embodiments, the instrumentation library uses the W3C TraceContext standard for sharing trace data between different system components. This is the same standard used by OpenTelemetry. By following this standard, the library can easily exchange data with other services and platforms that also use W3C TraceContext.

The instantiated library module of each stateless function need only include the functional units necessary for its operation. Because of the modular nature of the library code 202, function code packages can be written to only include dependencies on functional units of the library code 202 that they need, rather than including the entire library. Advantageously, this means that each stateless function can operate more efficiently by selectively incorporating only the relevant parts of the library, reducing the overall size and complexity of the code, and improving execution speed and resource utilisation.

For example, returning to Figure 4, it can be seen that the first stateless function 210 only interacts with the first serverless-environment service interface 115 associated with the message publishing service 401 and the second serverless-environment service interface 116 associated with the data storage service 402. Accordingly, the first library module instance 203 instantiated in the first stateless function 210 need only include the first functional unit 301 and second functional unit 302. Similarly, the second library module instance 204 instantiated in the second stateless function 211 need only include the second functional unit 302 and the third functional unit 303, and the third library module instance 205 instantiated in the third stateless function 212 need only include the third functional unit 303.

Returning to Figure 1, as mentioned above, in conventional arrangements, the system 101 comprises a configuration settings module 107, via which configuration data can be set which controls the settings for the environment.

In a typical conventional arrangement, the configuration settings of the serverless environment 104 may be such that telemetry data emitted by the stateless functions of the application 114 by default are emitted to the proprietary telemetry tool 118. For example, in an AWS Lambda environment, AWS Lambda functions will by default be configured to emit telemetry data to the proprietary AWS X-Ray observability tool.

Accordingly, in certain examples, the configuration settings defined in the configuration settings module 107 need to be adjusted to override any such defaults. Specifically, these defaults are overridden to configure the serverless environment to run the stateless functions in the serverless environment decoupled from the proprietary observability tool (e.g. the AWS X-Ray observability tool).

For example, if the serverless environment 104 in the system 201 shown in Figure 2 is provided by an AWS Lambda environment, the configuration settings may be updated to use the ADOT Collector, with the OTLP exporter.

The ADOT Collector (AWS Distro for OpenTelemetry Collector) is part of the OpenTelemetry project intended for AWS environments, collecting metrics, traces, and logs from applications and allowing for flexibility in processing and exporting this data. The OTLP exporter, or OpenTelemetry Line Protocol exporter, sends telemetry data in the OTLP format, making it compatible with various observability platforms that support OpenTelemetry. By configuring the system to use the ADOT Collector and OTLP exporter, telemetry data can be generated in a standardised, open-source format, thus removing the necessity to integrate specifically with AWS X-Ray, and allowing for greater interoperability and flexibility with various other observability tools.

Further, if the observability back end 206 is provided by a specific non-proprietary tool, such as "New Relic", a change may be needed in the configuration data. Specifically, the configuration can be updated to configure the OTLP Exporter to send all telemetry data to a specific non-proprietary observability tool, for example a suitable observability tool provided by New Relic.

Advantageously, switching to a different observability tool that is compatible with the OpenTelemetry (OTEL) standard requires only a change in configuration settings, not a change in the code of the stateless functions themselves. This feature enhances adaptability and simplifies the process of integrating with various observability platforms.

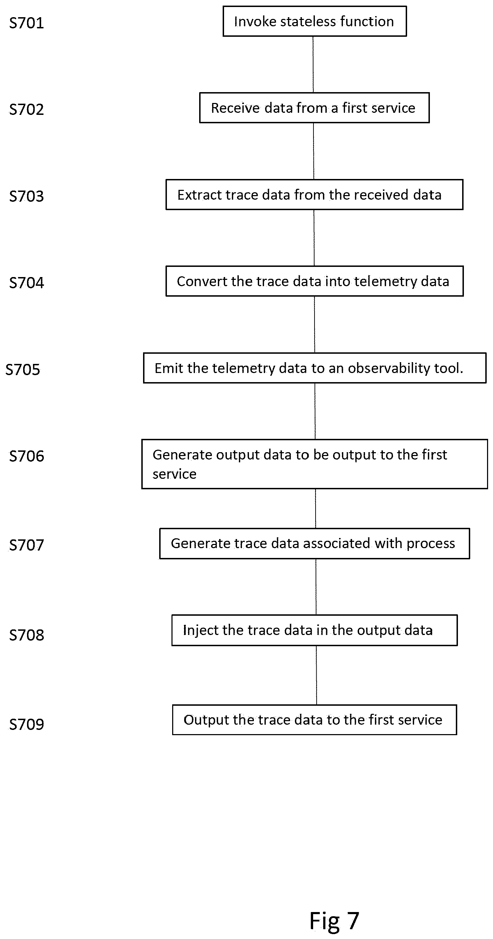

Figure 7 provides a flow diagram depicting a process for processing trace data in accordance with certain embodiments of the invention. As described above, in certain embodiments, the trace data is trace data in accordance with the W3C TraceContext standard.

At a first step S701, a stateless function is invoked in a serverless environment as part of the implementation of an application. For example, this may be a Lambda function invoked in the AWS Lamda serverless environment provided by Amazon Web Services. The stateless function includes an instance of an instrumentation library module as described above.

At a second step S702, the invoked stateless function receives data from a serverless environment service. This is typically, the serverless environment service that invoked the stateless function.

At a third step S703, a functional unit associated with this serverless environment service provided with the instrumentation library module instance extracts trace data from the data received from the serverless environment service.

At a fourth step S704, functionality provided by a core functionality of the instrumentation library module instance enables the stateless function to convert this extracted trace data to telemetry data, and at a fifth step S705, emit this data to an observability back end.

In the meantime, the stateless function executes and at a sixth step S706 generates output data to output to a serverless environment service. This can either be the same serverless environment service that invoked the stateless function, or a further serverless environment service.

At a seventh step S707 trace data is generated associated with the execution of the stateless function.

At an eighth step S708, this trace data is injected into the output data. If the output data is to be output to the same serverless environment service that invoked the stateless function, this trace data injection operation is performed by the functional unit of the instrumentation library module instance associated with this service. On the other hand if the output data is to be output to a further serverless environment service, the injection operation is performed by a further functional unit of the instrumentation library module instance which is associated with this further serverless environment service.

At a ninth step S709, the output data including the trace data is output to the relevant serverless environment service.

All of the features disclosed in this specification (including any accompanying claims, abstract and drawings), and/or all of the steps of any method or process so disclosed, may be combined in any combination, except combinations where at least some of such features and/or steps are mutually exclusive. Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features. The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

It will be appreciated that various embodiments of the present disclosure have been described herein for purposes of illustration, and that various modifications may be made without departing from the scope of the present disclosure. Accordingly, the various embodiments disclosed herein are not intended to be limiting, with the true scope being indicated by the following claims.

## Claims

1. A method of generating telemetry data in a serverless environment, said method comprising the steps of:
invoking a stateless function, said stateless function comprising an instrumentation library module configured to facilitate telemetry data collection during the execution of the stateless function, said instrumentation library comprising at least a first functional unit, said first functional unit associated with a first service at least by being configured to process trace data associated with that first service;
receiving data, at the stateless function, from the first service;
extracting, by the functional unit, trace data from the received data;
converting the trace data into telemetry data; and
emitting the telemetry data to an observability tool.

2. A method according to claim 1, further comprising:
executing by the stateless function at least one process which generates output data to be output to the first service;
generating trace data associated with the process;
injecting, by the first functional unit associated with the specific service, the trace data in the output data, and
outputting the trace data to the specific service.

3. A method according to claim 1 or 2, wherein the instrumentation library comprises at least one further functional unit, said at least one further functional unit associated with a further service by being configured to process trace data associated with that further service, said method further comprising:
executing by the stateless function the at least one process which generates output data to be output to the further service;
generating further trace data associated with the further process;
injecting, by the further functional unit, the further trace data in the output data, and
outputting the trace data to the further service.

4. A method according to claim 1, 2 or 3, wherein the instrumentation library further comprises a core functionality module, and the step of converting the trace data into telemetry data and emitting the telemetry data to an observability tool is undertaken by functionality defined in the core functionality module.

5. A method according to claim 4, wherein converting the trace data into telemetry data comprises generating and the telemetry data in accordance with an open telemetry standard.

6. A method according to claim 5, wherein the open telemetry standard is the OpenTelemetry standard.

7. A method according to any previous claim, wherein the trace data is generated in accordance with the W3C TraceContext standard.

8. A method according to any previous claim, further comprising configuring the serverless environment to run the stateless function in the serverless environment decoupled from a proprietary observability tool.

9. A method according to any previous claim, further comprising configuring the serverless environment to run the stateless function in the serverless environment to direct all telemetry data to a predetermined observability tool.

10. A method according to claim 9, wherein the predetermined observability tool is a non-proprietary observability tool.

11. A computer program comprising computer code defining an instrumentation library which when instantiated in an invoked stateless function as part of an application running in a serverless environment, facilitates telemetry data collection during the execution of the stateless function, said instrumentation library comprising at least a first functional unit, said first functional unit associated with a first service of the serverless environment at least by being configured to process trace data associated with that first service, wherein said at least first functional unit when implemented as part of the stateless function is configured to:
extract trace data from data received from the first service, said instrumentation library comprising further functionality which when implemented as part of the stateless function is configured to:
convert the trace data into telemetry data, and
emit the telemetry data to an observability tool.

12. A computer program according to claim 11, wherein the first functional unit when implemented as part of the stateless function is further configured to:
inject trace data generated by the invoked stateless function in output data output by the invoked stateless function to the specific service.

13. A computer program according to claim 11 or 12, wherein the said instrumentation library comprises at least a further functional unit, said further functional unit associated with a further service of the serverless environment at least by being configured to process trace data associated with that further service, wherein the further functional unit when implemented as part of the stateless function is configured to:
inject trace data generated by the invoked stateless function in output data output by the invoked stateless function to the further service.

14. A computer program according to any of claims 11 to 13, wherein the instrumentation library further comprises a core functionality module, said core functionality module when implemented as part of the stateless function is configured to:
convert the trace data into telemetry data, and
emit the telemetry data to an observability tool is undertaken by functionality defined in the core functionality module.

15. A computer program according to claim 14, wherein the core functionality module is configured to convert the trace data into telemetry data in accordance with an open telemetry standard.

16. A computer program according to claim 15, wherein the open telemetry standard is the OpenTelemetry standard.

17. A computer implemented method according to any previous claim, wherein the trace data is trace data in accordance with the W3C TraceContext standard.
